# EUROPÄISCHE PATENTSCHRIFT

(11) **EP 4 212 272 B1**
(45) Veröffentlichungstag und Bekanntmachung des Hinweises auf die Patenterteilung: **03.12.2025**
(21) Anmeldenummer: 23150448.1
(22) Anmeldetag: 05.01.2023
(51) Int. Cl.: B23C 3/35, B23C 5/08, B23C 5/12, E05B 19/00

(54) **VERFAHREN ZUM PROFILIEREN EINES FLACHSCHLÜSSELS ODER FLACHSCHLÜSSEL MIT UNTERBROCHENER NUT**
METHOD FOR PROFILING A FLAT KEY OR A FLAT KEY WITH INTERRUPTED GROOVE
PROCÉDÉ DE PROFILAGE D'UNE CLÉ PLATE OU CLÉ PLATE AVEC RAINURE INTERROMPUE

(30) Priorität: 17.01.2022 DE 102022100895; 25.07.2022 DE 102022118519; 19.10.2022 DE 102022127488
(43) Veröffentlichungstag der Anmeldung: 19.07.2023
(73) Patentinhaber: C.Ed. Schulte Gesellschaft mit beschränkter Haftung Zylinderschlossfabrik, 42551 Velbert (DE)
(72) Erfinder: Wallberg, Thomas, 42489 Wülfrath (DE); Müller, Patrick, 42549 Velbert (DE); Schneider, Stephan, 45259 Essen (DE)
(74) Vertreter: Grundmann, Dirk

(56) Entgegenhaltungen:
- EP-A1- 3 822 433
- EP-A1- 3 822 434
- WO-A1-2020/249462
- DE-A1- 102010 017 166
- US-A1- 2013 192 320

## Beschreibung

### Gebiet der Technik

Die Erfindung betrifft ein Verfahren zum Herstellen einer Profilnut eines Flachschlüssels nach dem Oberbegriff des Anspruchs 1.

Die Erfindung betrifft darüber hinaus einen Flachschlüssel nach dem Oberbegriff des Anspruchs 6.

Die Erfindung betrifft außerdem die Verwendung eines Flachschlüsssels nach dem Oberbegriff des Anspruchs 14.

### Stand der Technik

Die DE 10 2010 017 166 A1 beschreibt ein Verfahren zum Profilieren der Breitseite eines Flachschlüssels. Der Schlüsselrohling wird in einer Spannvorrichtung eingespannt. Mit einem Scheibenfräser wird in die Breitseite des Schlüsselrohlings eine Nut eingefräst. Indem die Neigung der Fräserwellenachse zu einer Breitseitenfläche geneigt ist, besitzt die Nut eine hinterschnittene Nutwand.

Die EP 1 106 756 A2 beschreibt einen Flachschlüssel mit Vertiefungen, in die Einsatzkörper eingepresst sind, um so lokale Höhenstrukturen zu bilden, die von einem Zuhaltungsstift abgetastet werden können.

Die EP 0 605 932 A1 offenbart einen Flachschlüssel, dessen Breitseite eine längliche Vertiefung ausbildet. In der länglichen Vertiefung erstreckt sich eine Rippe, die bereichsweise unterbrochen ist.

Die US 3,877,267 beschreibt einen Flachschlüssel mit in seiner Längsrichtung verlaufenden Nuten. Die Nuten besitzen Vertiefungen, in die Kugeln eingepresst sind, die jeweils eine Höhenstruktur bilden, die von einem Zuhaltungsstift abgetastet werden kann.

Die DE 10 2005 058 549 A1 beschreibt ein Verfahren, mit dem in eine Breitseitenfläche eines Flachschlüssels eine Nut gefräst wird, deren Nutboden durch eine Verlagerung des Fräsers während des Einfräsens der Nut in einer Richtung quer zum Schlüsselschaft Zonen mit unterschiedlicher Nuttiefe aufweist, die von einem Zuhaltungselement abgetastet werden können.

Die US 2006/0027004 A1 beschreibt einen Schlüsselschaft mit einer in den Schlüsselschaft eingefrästen Nut, die mehrere Unterbrechungen aufweist.

Die WO 2021/142501 A1 beschreibt die Bearbeitung eines Schlüsselschaftes mit einem Scheibenfräser, um Höhenstrukturen zu erzeugen.

Aus der WO 2017/006356 A1 ist ein Zylinderschloss mit einem Schlüssel vorbekannt, bei dem mit einem Tastelement eine in den Schlüsselschaft eingefräste Kodierungsnut abgetastet wird.

Die EP 2 770 139 A2 beschreibt ein Schließsystem bestehend aus einem Schließzylinder und einem passenden Schlüssel, wobei in die Breitseitenfläche des Schlüsselschaftes mehrere parallel zueinander verlaufende Variierungsnuten eingeschnitten sind. Zusätzlich ist in einen an die Spitze des Schlüssels angrenzenden Teilbereich des Schlüsselschaftes eine sich nur über eine Teillänge des Schlüsselschaftes erstreckende Codierungsnut eingeschnitten, wobei der Einschnitt von einem fest im Zylinderkern sitzenden ersten Zuhaltungsstift und das Ende der Codierungsnut von einem beweglichen Zuhaltungsstift abgetastet werden.

Ein Flachschlüssel mit schräg in die Breitseitenflächen eingeschnittenen Variierungsnuten zeigt die DE 33 14 511 A1. Die DE 35 42 008 A1 beschreibt einen Schlüssel für einen Schließzylinder, bei dem mit einem schräg zur Schlüsselbreitseitenfläche im Zylinderkern gelagerten beweglichen Zuhaltungsstift eine Codierungsfläche abgetastet wird.

Aus der EP 3 822 433 A1 ist ein Verfahren nach dem Oberbegriff des Anspruchs 1 sowie ein Flachschlüssel nach dem Oberbegriff des Anspruchs 6 bekannt, bei dem entlang einer Mittellinie des Schlüsselschaftes eine im Querschnitt V-förmige Nut eingefräst ist. In den Nutwänden befinden sich Codierungsaussparungen. Neben dieser Nut und einer Randkante der Schlüsselschaft-Breitseite erstreckt sich eine weitere Nut, die durch eine Auf- und Abbewegung des Fräsers bei ihrer Fertigung Bereiche unterschiedlicher Nuttiefe besitzt. Die EP 3 822 433 A1 offenbart zudem eine Verwendung eines Flachschlüssels nach dem Oberbegriff des Anspruchs 14.

Die US 2013/019320 A1 beschreibt einen Schlüssel, der eine Schlüsselbreitseite aufweist, die ein wellenförmiges Profil besitzt.

### Zusammenfassung der Erfindung

Der Erfindung liegt die Aufgabe zugrunde, ein Verfahren weiterzubilden, mit dem durch Verändern der Eintauchtiefe eines Fräswerkzeugs während des Schneidens einer Vertiefung eine von einem in einem Schließzylinder angeordneten Tastelement abtastbare Höhenstruktur gefertigt wird. Der Erfindung liegt weiter die Aufgabe zugrunde, einen derartigen Schlüssel so auszubilden, dass die Anfertigung von Kopien des Schlüssels erschwert wird.

Gelöst wird die Aufgabe durch die in den unabhängigen Ansprüchen 1, 6 und 14 angegebene Erfindung, wobei die Unteransprüche vorteilhafte Weiterbildungen darstellen.

Zunächst und im Wesentlichen bildet die Erfindung ein Verfahren weiter, wie es in der DE 10 2010017166 A1 bereits beschrieben wird, wobei das erfindungsgemäße Verfahren durch die Merkmale des Anspruchs 1 definiert ist. Hierbei wird ein Fräswerkzeug einem Schlüsselrohling derart zugestellt, dass das Fräswerkzeug eine Eintauchtiefe in dem Schlüsselrohling besitzt. Das Fräswerkzeug wird dann in der Längsrichtung des Flachschlüssels vorgeschoben, sodass eine Nut in einer Seitenfläche des Rohlings entsteht, deren Nuttiefe der Eintauchtiefe des Fräswerkzeugs entspricht. Erfindungsgemäß wird der Abstand des Fräswerkzeugs zu einer Spannvorrichtung, die den Schlüsselrohling hält, derart zunächst vergrößert und anschließend wieder vermindert, dass die Eintauchtiefe des Fräswerkzeug verändert wird. Dabei vermindert sich in dem Bereich, wo die Eintauchtiefe des Fräswerkzeugs beim Fräsen der Nut kleiner wird, die Nuttiefe. Es entsteht eine Höhenstruktur innerhalb der Nut, die sich über ihre gesamte Breitseite erstreckt und die von einem Zuhaltungsstift eines Schließzylinders, der mit einem so gefertigten Schlüssel geschlossen werden kann, abgetastet werden kann. Die Seitenfläche kann einer Breitseite des Flachschlüssels zugeordnet sein. Die Seitenfläche kann aber auch einer Schlüsselschmalseite zugeordnet sein. Unter Seitenfläche kann eine beim unprofilierten Rohling sich in einer Ebene erstreckende Oberfläche verstanden werden, die bei einem dem Herstellen der Profilnut vorangehenden Profilieren des Rohlings mit Nuten und Rippen versehen wird. Aus einer derartigen Ebene können aber auch Rippen oder anderweitige Profilelemente herausragen. Die Seitenfläche, die die Nuttiefe definiert, wird bevorzugt von einer derartigen Ebene gebildet. Das Fräswerkzeug ist ein Scheibenfräser, der auf seiner Umfangsfläche eine Vielzahl von Schneidzähnen ausbildet. Die Schneidzähne weisen Schneidkanten auf, deren Verlauf dem Nutboden beziehungsweise den Nutwänden entspricht. Der Nutboden kann beispielsweise parallel zur Seitenfläche des Flachschlüssels beziehungsweise Rohlings verlaufen. Der Nutboden kann aber auch eine Neigung zur Seitenfläche besitzen. Der Nutboden hat auf zumindest einem kleinen Bereich eine maximale Nuttiefe, die der maximalen Eintauchtiefe des Fräswerkzeugs entspricht. Im Bereich der Höhenstruktur verändert sich die Nuttiefe wegen der sich verändernden Eintauchtiefe des Fräswerkzeugs. Hat das Fräswerkzeug eine Drehachse, die einen Neigungswinkel zur Seitenfläche aufweist, der von Null Grad verschieden ist, wird eine hinterschnittene Nutwand gefertigt. Die Verwendung eines Scheibenfräsers bringt den Vorteil, dass sich beim Vergrößern des Abstands des Fräswerkzeuges zum Schlüsselrohling eine Rampe zwischen Nut mit maximaler Nuttiefe und Höhenstruktur ausbildet. Beim anschließenden Verringern des Abstandes des Fräswerkzeugs zum Schlüsselrohling entsteht eine weitere Rampe zwischen der Höhenstruktur und der Nut. Im Bereich der Rampen verläuft der Nutboden schräg zu einer Bezugsebene, die parallel zur Seitenfläche verläuft. Der Nutboden kann im Bereich der Rampen stetig von der Nut bis zu einem Mittelabschnitt der höheren Struktur ansteigen. Der Nutboden kann einen Längsquerschnitt ausbilden, der sich auf einer Bogenlinie erstreckt. Die Form der Bogenlinie wird zum einen vom Radius des Scheibenfräsers beeinflusst und zum anderen durch die Vorschubgeschwindigkeit. Die Steigung des Nutbodens kann ausgehend von einem Bereich der Nut mit im Wesentlichen gleichbleibender Nuttiefe stetig ansteigen. Es ist somit vorgesehen, dass die Steigung des Nutbodens kontinuierlich bis zu einem Mittelabschnitt der Höhenstruktur ansteigt. Der Nutboden kann sich hier im Längsschnitt auf einer Bogenlinie erstrecken, die einer Innenkreisbogenlinie ähnlich ist. Im Bereich der Rampe verläuft der Nutboden bevorzugt hohl. Der Nutboden kann im Bereich der Rampe aber auch geradlinig, jedoch schräg zur Erstreckungsrichtung der Nut verlaufen. Es kann ferner vorgesehen sein, dass das Fräswerkzeug bei der Fertigung der Höhenstruktur vollständig aus der Nut austaucht, sodass die Höhenstruktur von einem sich in Längsrichtung erstreckenden, unterbrochenen Einschnitt in die Seitenfläche des Schlüsselrohlings ausgebildet ist. Es kann aber auch vorgesehen sein, dass das Fräswerkzeug nur soweit vom Schlüsselrohling weg verlagert wird, dass sich ein von einem Zuhaltungsstift eines Schließzylinders abtastbarer Abschnitt, insbesondere Mittelabschnitt der Höhenstruktur ausbildet, dessen Niveau zwischen Nutrand und tiefsten Niveau des Nutbodens liegt. Bei einer ersten Variante des Verfahrens wird ein Fräswerkzeug einem Rohling derart zugestellt, dass bei einem der Zustellung folgenden Vorschub in einer Richtung parallel zur Seitenfläche des Rohlings eine sich in Längsrichtung der Seitenfläche verlaufende Nut gefräst wird. Während des Vorschubs wird die Eintauchtiefe des Fräswerkzeugs vermindert und nach der Fertigung einer Höhenstruktur wieder vergrößert. Bei dieser Variante ist die Höhenstruktur von der Schlüsselspitze beabstandet. Bei einer zweiten Variante des Verfahrens kann die Höhenstruktur auch an der Schlüsselspitze oder im Übergangsbereich zur Schlüsselreide angeordnet sein. Bei dieser Variante erfolgt ein Spanabtrag bereits in der Endphase der Zustellung. Bevorzugt teilt die Höhenstruktur aber die Nut in einen sich bis zur Schlüsselspitze erstreckenden Abschnitt und einen bis zur Schlüsselreide erstreckenden Abschnitt. Die Drehachse des die Schneidzähne aufweisenden Werkzeuges besitzt einen Neigungswinkel zur Seitenfläche, der bevorzugt in einem Bereich zwischen 5° und 70°, besonders bevorzugt in einem Bereich zwischen 50° und 70°, liegt. Die Verlagerungsrichtung, mit der die Zonen unterschiedlicher Nuttiefe gefertigt werden, verläuft bevorzugt senkrecht zur Drehachse des Werkzeugs. Die Verlagerungsrichtung ist somit um diesen Winkel geneigt zur Flächennormalen der Seitenfläche des Schlüsselschaftes. Dadurch bleiben beim Fräsen der an die Zone verminderter Nuttiefe angrenzenden Rampen hinterschnittene Nutwände. Bei einem bevorzugten Verfahren wird zunächst ein Schlüsselschaft gefertigt, der hinterschnittene Nuten aufweist, beispielsweise durch Anwendung des in der DE 10 2010 107 166 A1 beschriebenen Verfahrens. Mit dem weiteren Fräswerkzeug kann dann in einem zweiten Fertigungsschritt eine weitere Vertiefung in die Schlüsselbreitseitenfläche eingebracht werden, wobei entweder eine Nut mit zwei sich gegenüberliegenden Nutwänden erzeugt wird oder eine bereits gefertigte Nut verbreitert wird. In beiden Fällen entsteht im zweiten Bearbeitungsschritt eine hinterschnittene Flanke und zumindest eine Rampe, bei deren Verlauf die hinterschnittene Flanke eine sich stetig vermindernde Höhe aufweist. Nach einer Alternative ist vorgesehen, dass eine in dem ersten Fertigungsschritt gefertigte Nut eine hinterschnittene Flanke aufweist und diese hinterschnittene Flanke bereichsweise im zweiten Bearbeitungsschritt entfernt wird. Dabei bleibt für eine sich über eine Höhenstruktur erstreckende Zone ein Abschnitt der Randkante der ursprünglich hinterschnittenen Nut erhalten, die abgetastet werden kann. Zu dieser Höhenstruktur werden mit dem zweiten Bearbeitungsschritt benachbarte Zonen erzeugt, die ebenfalls eine Randkante einer hinterschnittenen Nutwand aufweist, die aber parallel versetzt zur ursprünglichen Randkante einer hinterschnittenen Nutwand verlaufen. Auch diese Randkante kann abgetastet werden. Es ist insbesondere vorgesehen, dass die Schneidzähne, mit der die Nut im zweiten Bearbeitungsschritt gefertigt werden, einen Freiwinkel von 3° bis 4° aufweisen. Der Neigungswinkel, um den die Achse des Werkzeuges geneigt ist, ist bevorzugt größer als der Freiwinkel, sodass sich eine hinterschnittene Wand ausbildet. Ferner kann vorgesehen sein, dass der Neigungswinkel des Werkzeuges, mit dem der Schlüsselschaft im zweiten Bearbeitungsschritt bearbeitet wird, dem Neigungswinkel des Werkzeugs entspricht, mit dem der Schlüsselschaft beim ersten Bearbeitungsschritt bearbeitet wird, bei dem ein oder mehrere Nuten gefräst werden, die sich mit gleichbleibender Nuttiefe über die gesamte Länge des Schlüsselschaftes erstrecken.

Die Erfindung betrifft darüber hinaus einen Flachschlüssel gemäß Anspruch 6. Anders als bei einem Flachschlüssel, wie er in der US 3,877,267 beschrieben ist, wird die Höhenstruktur nicht von Einsatzelementen ausgebildet, die in eine Höhlung der Breitseite des Schlüsselschaftes eingepresst sind. Die Höhenstruktur erstreckt sich auch, anders als in der EP 0 605 932 A1 beschrieben, über die gesamte Breite der Nut. Die Höhenstruktur ist materialeinheitlich mit dem Schlüsselkörper beziehungsweise dem Rohling verbunden. Bei der Höhenstruktur handelt es sich um einen freigefrästen Bereich des Schlüsselkörpers. Die Höhenstruktur weist einen Mittelabschnitt auf, an den sich Rampen anschließen. Die Höhenstruktur kann auch von einer Stufe ausgebildet sein. Im Bereich der Rampen kann der Nutboden stetig hin zum Mittelabschnitt ansteigen. Die Steigung des Nutbodens kann dabei mit zunehmendem Abstand von dem Mittelabschnitt der Höhenstruktur abnehmen. In einem Längsschnitt kann die Rampe eine Schräge sein. Die Rampe kann im Längsschnitt aber auch entlang einer stetig in Richtung des Mittelabschnitts ansteigenden Kurve oder Bogenlinie verlaufen. Wird eine unterbrochene Nut mit einem Fräswerkzeug gefertigt, dessen Eintauchtiefe in den Rohling während des Schneidens der Nut geändert wird, so kann die Rampe einen von der Bewegung des Fräswerkzeugs abhängigen Tiefenverlauf aufweisen. Wird die Nut mit einem Scheibenfräser gefertigt, so spiegelt sich der Radius des Fräswerkzeugs in dem Verlauf des Nutbodens im Bereich der Rampen wieder. Da der Drehbewegung des Scheibenfräsers eine lineare Vorschubbewegung überlagert sein kann, kann der Längsschnitt des Nutbodens im Bereich der Rampe die Form eines Kreises beziehungsweise einer Bogenlinie haben, die der Bogenlinie eines Kreises ähnlich ist. Eine an die Höhenstruktur angrenzende Nutwand ist hinterschnitten. Es kann vorgesehen sein, dass das Niveau der Höhenstruktur beziehungsweise das Niveau des Mittelabschnitts dem Niveau der Seitenfläche des Rohlings beziehungsweise des Schlüsselkörpers entspricht. Dies ist insbesondere dann der Fall, wenn das Fräswerkzeug beim Fertigen der Höhenstruktur vollständig aus dem Rohling austritt. Das Niveau der Höhenstruktur beziehungsweise das Niveau des Mittelabschnitts kann aber auch geringer sein. Die Seitenfläche kann eine Breitseitenfläche oder eine Schmalseitenfläche sein. Die Seitenfläche bildet bevorzugt eine Bezugsebene, in der sich eine Seite, insbesondere die Breitseite des Rohlings oder des bereits vorprofilierten Rohlings erstreckt. Die Vorschubrichtung des Fräswerkzeugs erstreckt sich parallel zu dieser Bezugsebene. Die Austauchbewegung beziehungsweise Eintauchbewegung des Fräswerkzeugs besitzt eine Bewegungskomponente, die senkrecht zur Bezugsebene verläuft. Soll eine der Nutwände eine hinterschnittene Nutwand sein, so hat eine Drehachse eines Scheibenfräsers gegenüber einer Flächennormalen zur Bezugsebene einen Winkel, der von 90 Grad verschieden ist. Der erfindungsgemäße Flachschlüssel kann ein Wendeschlüssel sein, der zwei identisch profilierte Breitseitenflächen aufweist und eine Punktsymmetrie bezogen auf eine Mittellinie besitzt. Der Flachschlüssel kann zusätzliche Kodierungsausnehmungen besitzen, die in der Breitseitenfläche angeordnet sind und die von Zuhaltungsstiften eines Schließzylinders abgetastet werden können. Der Flachschlüssel kann eine Schlüsselbrust aufweisen, in die Kodierungsausnehmungen in Form von Kerben eingebracht sind, die von Zuhaltungsstiften eines Schließzylinders abgetastet werden können. Der Flachschlüssel kann einen von der Schlüsselbrust verschieden gestalteten Schlüsselrücken aufweisen. Der so gefertigte Schlüssel weist eine Vielzahl von in Längsrichtung zumindest einer Seitenfläche des Schlüsselschaftes, bevorzugt beiden Seiten des Schlüsselschaftes verlaufende Nuten, auf, wobei zumindest eine dieser Nuten eine hinterschnittene Nutwand besitzt. Diese kann eine Randkante zu einer Breitseitenfläche des Schlüsselschaftes ausbilden, die von einem Tastelement eines Schließzylinders abgetastet werden kann. Die zumindest eine hinterschnittene Wand, die auch eine Wand einer durch den Einschnitt gefertigten Rippe sein kann, kann zumindest bereichsweise verbreitert sein. Die Tiefe der ursprünglichen, später verbreiterten Nut kann größer sein, als die durch die Nutverbreiterung erzeugte Vertiefung, die eine Nut mit nur einer Nutwand und einem Nutboden ausbilden kann. Es kann sich somit eine Stufe ausbilden, die zwischen einem unteren hinterschnittenen Abschnitt einer Wand bis zum Boden der ursprünglichen Nut und einer durch die später eingeschnittene Vertiefung erzeugten zweiten hinterschnittenen Wand bis zur Breitseitenfläche des Schlüsselschaftes beziehungsweise einer Rippe liegt. Der Schlüsselschaft kann eine Ebene aufweisen, zu der die Breitseitenfläche parallel verläuft. Der erste Nutboden und der zweite Nutboden kann parallel zur Breitseitenfläche beziehungsweise zur Mittelebene des Schlüsselschaftes verlaufen, sodass der Schlüssel im Querschnitt rautenförmige Nuten aufweist. Die hinterschnittenen Nutwände der ersten und zweiten Nut verlaufen bevorzugt parallel zueinander. Die Nutböden der ersten und zweiten Nut verlaufen ebenfalls bevorzugt parallel zueinander.

Eine Ausgestaltung der Erfindung betrifft ein System aus zumindest zwei erfindungsgemäßen Flachschlüsseln, beispielsweise eine Anordnung von Schlüsseln einer Schließanlage oder eine Anordnung von Schlüsseln, die mehreren Schließanlagen zugeordnet sind. Zwei Schlüssel dieses Systems unterscheiden sich hinsichtlich der Lage der Höhenstruktur. Der Abstand der Höhenstruktur von einem Anschlag des Schlüssels, der beim Einstecken des Schlüssels in einen Schließkanal des Schließzylinders an einer Frontseite des Schließzylinders anstößt, kann bei den Schlüsseln verschieden sein. Es ist aber auch vorgesehen, dass die Höhe der Höhenstruktur oder die sich in der Erstreckungsrichtung des Schlüssels gemessene Länge des Mittelabschnitts der Höhenstruktur verschieden sind. Das System kann darüber hinaus ein oder mehrere Schließzylinder mit Zuhaltungsstiften aufweisen, die die Höhenstruktur beziehungsweise die Tiefe der die Höhenstruktur aufweisenden Nut abtasten. Die Schließzylinder können darüber hinaus weitere Zuhaltungsstifte aufweisen, die Kodierungsaussparungen abtasten.

Die Erfindung betrifft darüber hinaus die Verwendung eines Flachschlüssels in einem Schließzylinder gemäß Anspruch 14. Dabei wird der Mittelabschnitt der Höhenstruktur von einem Zuhaltungsstift abgetastet und/oder es wird zumindest ein Bereich des Nutbodens der die Höhenstruktur aufweisenden Nut in einem Bereich abgetastet, der von der Höhenstruktur entfernt ist. Es wird somit das Vorhandensein der Höhenstruktur oder das Nichtvorhandensein der Höhenstruktur abgetastet.

### Kurze Beschreibung der Zeichnungen

Ein Ausführungsbeispiel der Erfindung wird nachfolgend anhand beigefügter Zeichnungen erläutert. Es zeigen:
- Fig. 1: eine Draufsicht auf eine Breitseite eines aus einem Rohling 1 gefertigten Schlüssels,
- Fig. 2: in einer Stirnseitenansicht den Schlüssel und das eine Nut 2 in einer Breitseite 1' schneidende Fräswerkzeug 11,
- Fig. 3: eine Darstellung gemäß Figur 1, jedoch mit dem Fräswerkzeug 11,
- Fig. 4: den Schnitt gemäß der Linie IV-IV in Figur 3,
- Fig. 5: vergrößert den Ausschnitt V in Figur 4,
- Fig. 6: den Schnitt VI-VI in Figur 2 und
- Fig. 7: eine Darstellung gemäß Figur 6, jedoch mit dem Fräswerkzeug 11 in verschiedenen Positionen und Eintauchtiefen,
- Fig. 8: die Draufsicht auf einen Schlüssel eines zweites Ausführungsbeispiel,
- Fig. 9: eine Draufsicht auf die Rückseite des in Figur 8 dargestellten Schlüssels,
- Fig. 10: den Schnitt gemäß der Linie X-X in Figur 8,
- Fig. 11: eine perspektivische Darstellung eines Schlüssels eines dritten Ausführungsbeispiels,
- Fig. 12: eine zweite perspektivische Darstellung des dritten Ausführungsbeispiels,
- Fig. 13: vergrößert den Ausschnitt XIII in Figur 11,
- Fig. 14: vergrößert den Ausschnitt XIV in Figur 12,
- Fig. 15: den Schnitt gemäß der Linie XV-XV in Figur 13,
- Fig. 16: den Schnitt gemäß der Linie XVI-XVI in Figur 13,
- Fig. 17: eine Darstellung gemäß Figur 11 eines vierten Ausführungsbeispiels,
- Fig. 18: das vierte Ausführungsbeispiel in einer Darstellung gemäß Figur 12,
- Fig. 19: ein fünftes Ausführungsbeispiel in einer Darstellung gemäß Figur 13,
- Fig. 20: die Rückansicht des fünften Ausführungsbeispiels,
- Fig. 21: ein sechstes Ausführungsbeispiel in einer Darstellung gemäß Figur 11,
- Fig. 22: das sechste Ausführungsbeispiel in einer Darstellung gemäß Figur 12,
- Fig. 23: das sechste Ausführungsbeispiel in einer Darstellung gemäß Figur 13,
- Fig. 24: das sechste Ausführungsbeispiel in einer Darstellung gemäß Figur 14,
- Fig. 25: ein siebtes Ausführungsbeispiel in einer Darstellung gemäß Figur 11,
- Fig. 26: das siebte Ausführungsbeispiel in einer Darstellung gemäß Figur 12,
- Fig. 27: ein achtes Ausführungsbeispiel in einer Darstellung gemäß Figur 13,
- Fig. 28: das achte Ausführungsbeispiel in einer Darstellung gemäß Figur 14,
- Fig. 29: einen Schnitt gemäß Figur 16 eines neunten Ausführungsbeispiels und
- Fig. 30: eine Darstellung gemäß Figur 16 eines zehnten Ausführungsbeispiels.

### Beschreibung der Ausführungsformen

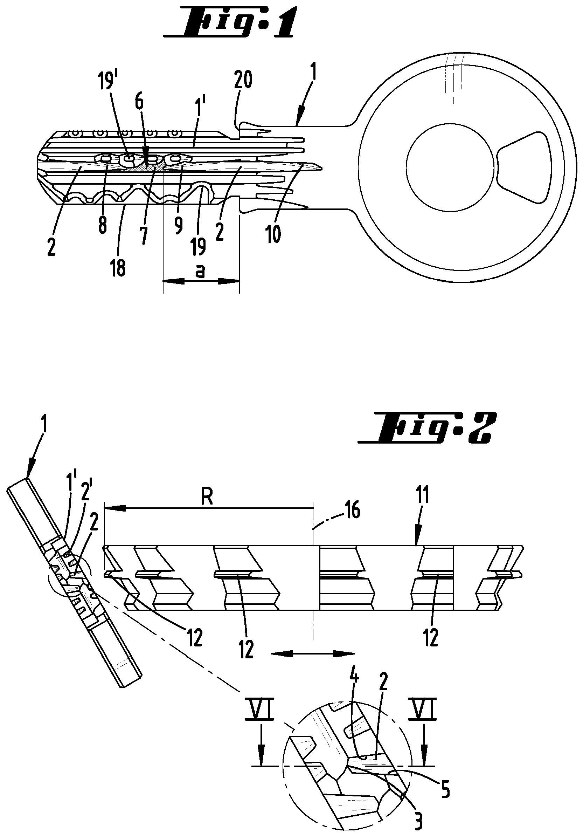

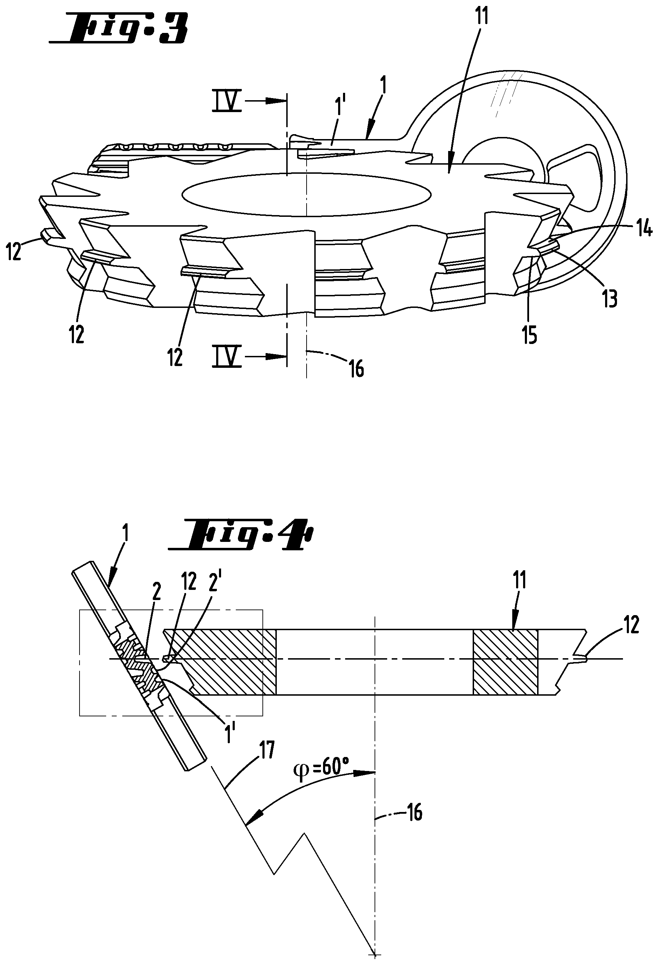

Ein Rohling 1 eines Flachschlüssels wird mit einem Verfahren, wie es beispielsweise in der DE 10 2010 017 166 A1 beschrieben wird, mit Nuten versehen, die parallel zueinander in einer Längsrichtung in der Breitseite 1' des Rohlings verlaufen. Mit einem Fräswerkzeug 11, wie es in den Figuren 2, 3, 4, 5 und 7 dargestellt ist, wird eine ergänzende Nut 2 in die Breitseite 1' des Rohlings 1 eingefräst.

Der Rohling 1, der auch weitere, beispielsweise von in der Schlüsselbreitseite angeordneten Vertiefungen oder Erhebungen ausgebildete Profilstrukturen aufweisen kann, die von Zuhaltungsstiften eines nicht dargestellten Profilzylinders abgetastet werden können, wird in einer nicht dargestellten Spannvorrichtung fixiert, sodass die Breitseite 1' bearbeitet werden kann. Mit einem Scheibenfräser 11, der eine Vielzahl von Schneidzähnen 12 aufweist, die auf einer Umfangsfläche des Scheibenfräsers 11 angeordnet sind, kann zumindest eine weitere Nut 2 in die Breitseite 1' eingefräst werden.

Die Breitseite 1' des Rohlings 1 definiert eine Seitenfläche 17. Es kann sich dabei um die Fläche handeln, in der sich die Breitseite einer Reide des Rohlings 1 erstreckt. Die Seitenfläche 17 ist dann eine Breitseitenfläche. Die Drehachse 16 des Fräswerkzeugs 11 ist gegenüber der Breitseitenfläche 17 um einen Winkel φ, der von 0 verschieden ist, geneigt. Als Folge dieses Neigungswinkels kann die Nut 2 eine hinterschnittene Nutwand 4 erhalten. Die Schneidzähne 12 des Scheibenfräsers 11 besitzen eine Schneidkante 13, mit der der Nutboden 3 geschnitten wird. Mit den Schneidkanten 14, 15 können die Nutwände 4, 5 geschnitten werden, die beim Ausführungsbeispiel nicht parallel zueinander verlaufen, sondern in einem kleinen spitzen Winkel zueinander stehen. Der Nutboden 3 verläuft in einer Ebene, die zur Breitseitenfläche 17 geneigt verläuft und die sich im Wesentlichen parallel zur Drehachse 16 erstreckt.

Zur Fertigung der im Ausführungsbeispiel unter Ausbildung einer Höhenstruktur 6 unterbrochenen Profil- oder Variierungsnut 2 wird die Eintauchtiefe der Schneidzähne 12 in das Material des Rohlings 1 während des spanabhebenden Fertigens der Nut 2 geändert. Hierzu wird zunächst in einer ersten Fertigungsphase das Fräswerkzeug 11 derart zugestellt, dass die Schneidzähne 12 eine maximale Eintauchtiefe in den Rohling 1 besitzen, sodass eine Nut 2 mit einer Nuttiefe t gefertigt wird, wenn das Fräswerkzeug 11 in Längsrichtung über die Breitseite 1' vorgeschoben wird.

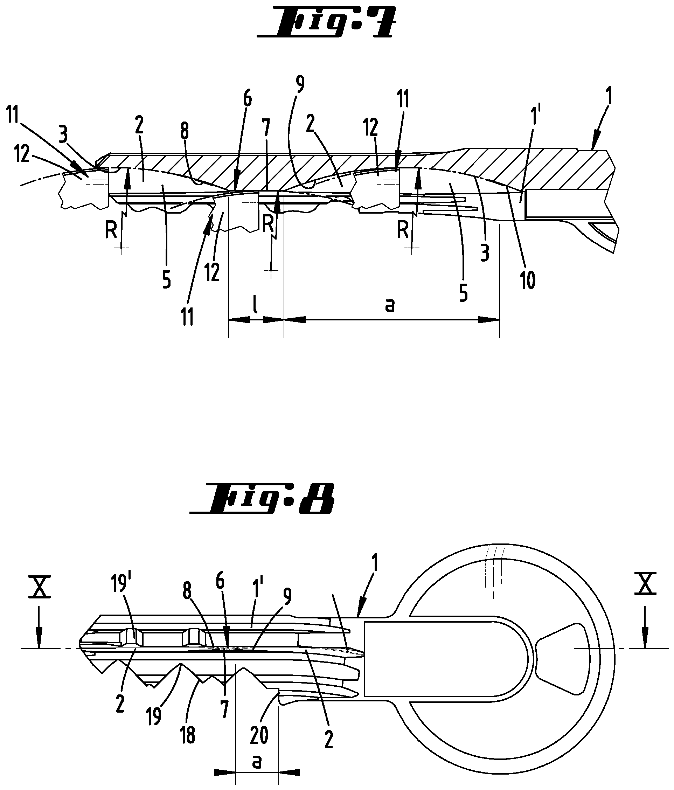

Aus der Figur 7 ist zu entnehmen, dass in einer weiteren Fertigungsphase der Abstand des Fräswerkzeuges 11 während des Vorschubs vergrößert wird, sodass die Schneidzähne 12 aus der vollen Tiefe der Nut 2 austreten, und dabei eine in ihrem Längsschnitt auf einer Bogenlinie verlaufende Rampe 8 erzeugen, sodass sich die Nuttiefe t vermindert. Die Schneidzähne 12 treten während des Fräsens der Nut 2 vollständig aus dem Material des Rohlings 1 aus, sodass die verbleibende Fläche des sich an die Rampe 8 anschließenden, eine Höhenstruktur 6 ausbildende Zone der Breitseite 1' des Rohlings nicht bearbeitet wird, sondern erhalten bleibt.

Nachdem das Fräswerkzeug 11 über die Länge der Höhenstruktur 6 vorgeschoben worden ist, wird der Abstand zwischen dem Fräswerkzeug 11 und dem Rohling 1 wieder vermindert, sodass während des folgenden Vorschubs die Eintauchtiefe der Schneidzähne 12 in das Material des Rohlings 1 vergrößert ist. Während dieser Fertigungsphase wird eine zweite Rampe 9 gefertigt. In der darauffolgenden Fertigungsphase behalten die Schneidzähne 12 dann wieder ihre volle Eintauchtiefe. In einem Auslaufbereich 10 treten die Schneidzähne aus dem Material des Rohlings 1 aus und hinterlassen dort eine Nut mit einem ansteigenden Nutboden.

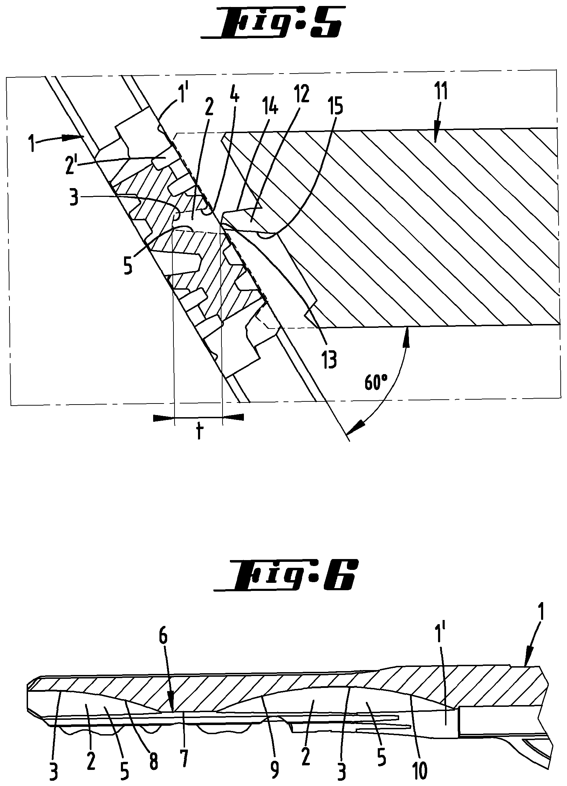

Die Längsschnittkontur des Nutbodens 3 wird in den Figuren 6 und 7 dargestellt. Es ist ersichtlich, dass der Nutboden 3 im Bereich der Rampen 8, 9 auf einer gekrümmten Querschnittslinie verläuft, wobei die Krümmung der Querschnittslinie vom Radius R des als Scheibenfräser ausgebildeten Fräswerkzeugs 11 und von der Vorschubgeschwindigkeit sowie von der Geschwindigkeit, mit der der Abstand des Fräswerkzeuges 11 zum Rohling 1 geändert wird, beziehungsweise von der Raumkurve, die das Fräswerkzeug 11 während der Bearbeitung der Höhenstruktur 6 durchläuft, beeinflusst wird.

In der Figur 7 ist ein Fräswerkzeug 11 dargestellt, das einen großen Radius R aufweist, sodass damit flach verlaufende Rampen 9 erzeugt werden. In einem anderen Ausführungsbeispiel kann der Radius R des als Scheibenfräser 11 ausgebildet Werkzeuge geringer sein, sodass sich längere Bereiche der Nut 2 ausbilden, die einen auf einem gleich bleibenden Niveau verlaufenden Nutboden 3 besitzen.

Ein solches Ausführungsbeispiel wird in den Figuren 8 bis 10 dargestellt. Das hier dargestellte Ausführungsbeispiel unterscheidet sich von dem in den Figuren 1 bis 7 dargestellten Ausführungsbeispiel im Wesentlichen dadurch, dass es sich bei dem in den Figuren 1 bis 7 dargestellten Ausführungsbeispiel um einen Wendeflachschlüssel handelt, dessen Breitseitenflächen identisch profiliert sind. Der dort dargestellte Wendeflachschlüssel besitzt darüber hinaus Kodierungsausnehmungen 19' und 19. Die Kodierungsausnehmungen 19' werden von Mulden in der Breitseite 1' des Schlüssels ausgebildet. Die Kodierungsausnehmungen 19 sind Einbuchtungen im Bereich einer Schlüsselbrust 18.

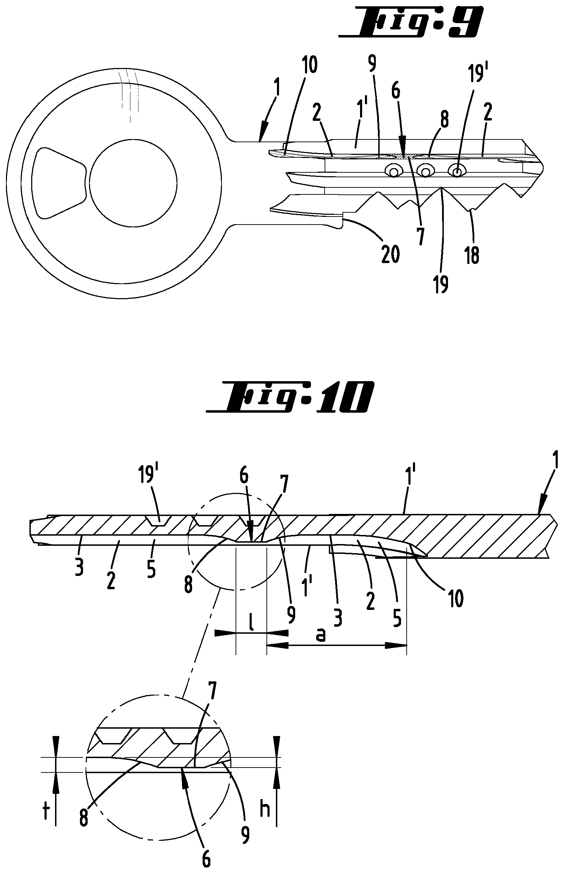

Bei dem in den Figuren 8 bis 10 dargestellten zweiten Ausführungsbeispiel sind die beiden in den Figuren 8 und 9 dargestellten Breitseiten unterschiedlich profiliert. Der Schlüssel weist einen Schlüsselrücken und eine dem Schlüsselrücken gegenüberliegende Schlüsselbrust 18 auf. Während der Schlüsselrücken geradlinig verläuft und nicht profiliert ist, besitzt die Schlüsselbrust 18 kerbenförmige Einschnitte, die Kodierungsausnehmungen 19 ausbilden.

Der in den Figuren 7 und 10 mit a bezeichnete Abstand der Höhenstruktur 6 von einem Anschlag 20 des Schlüssels kann zur Variation des Schlüsselgeheimnisses verändert werden. Das Schlüsselgeheimnis kann ferner dadurch beeinflusst werden, dass die Höhe h der Höhenstruktur 6 variiert wird. Die Höhe h kann maximal dem Betrag der Nuttiefe t entsprechen, aber auch jeden Wert zwischen 0 und dem Betrag der Nuttiefe t aufweisen.

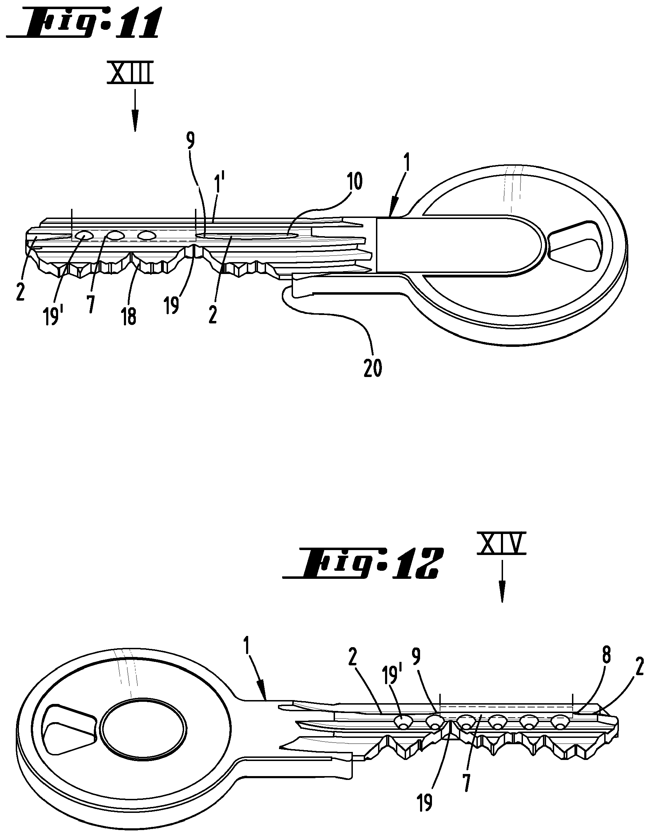

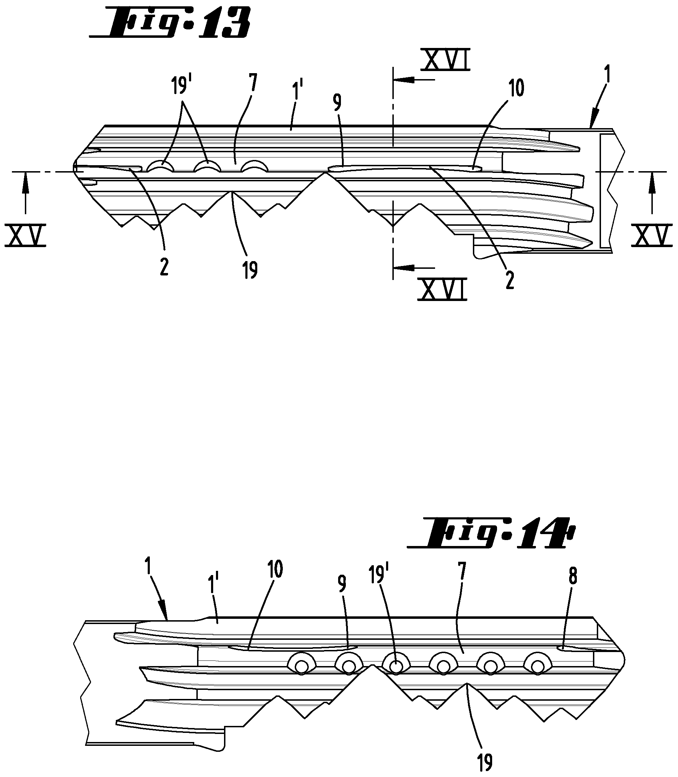

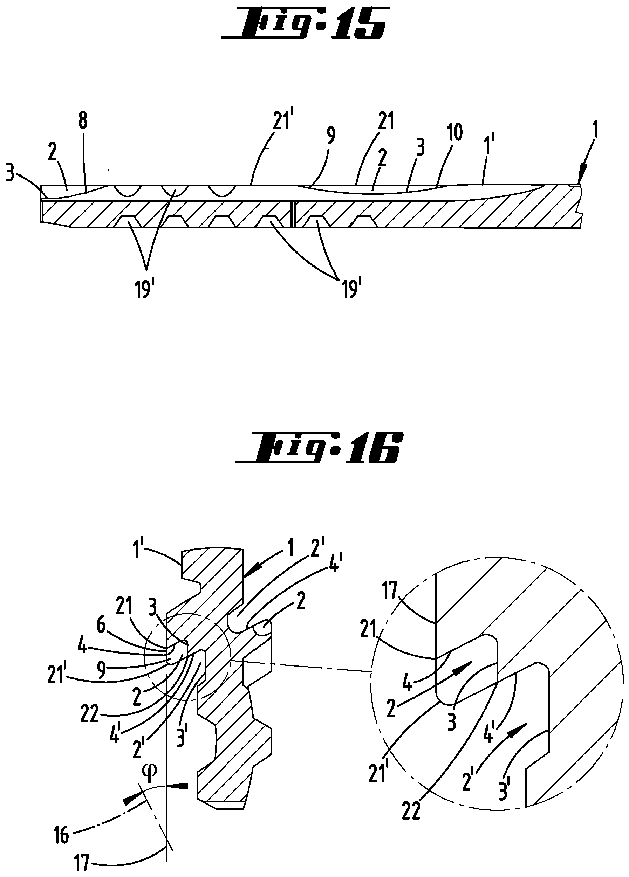

Die Figuren 11 bis 16 zeigen ein drittes Ausführungsbeispiel der Erfindung. Die Figur 16 zeigt einen Querschnitt eines Schlüsselschaftes, der in einem ersten Fertigungsschritt mit einem ersten Fräswerkzeug profiliert worden ist, wobei dabei erste Nuten 2' gefertigt werden, wobei zumindest eine der Nuten 2' eine hinterschnittene Nutwand 4' aufweist. Die Nutwand 4' erstreckt sich vom Nutboden 3' der ersten Nut 2' bis zu einer Breitseitenfläche 17. Die ersten Nuten 2' werden mit einem Verfahren gefräst, das in der DE 10 2010 107 116 A1 beschrieben wird. Ein Scheibenfräser besitzt hierzu Schneidzähne. Die Drehachse des Scheibenfräsers ist gegenüber einer in der Schlüsselbreitseitenfläche 17 verlaufenden Bezugsgrade um einen Winkel φ geneigt, der im Bereich zwischen 4° und 70°, bevorzugt zwischen 40° und 70° liegen kann. Beim Ausführungsbeispiel beträgt der Neigungswinkel φ etwa 60°.

In einem darauffolgenden Fertigungsschritt wird ein Scheibenfräser verwendet, wie er beispielsweise in den Figuren 2 bis 5 dargestellt wird. Auch dieser Scheibenfräser besitzt eine Drehachse, die gegenüber der in der Breitseitenfläche 17 des Schlüsselschaftes liegenden Bezugsgeraden geneigt ist. Auch hier kann der Neigungswinkel φ in einem Bereich zwischen 4° und 70° beziehungsweise 40° und 70° liegen. Beim Ausführungsbeispiel liegt der Neigungswinkel φ etwa bei 60°. Der Neigungswinkel φ ist größer, als die Freiwinkel der Schneidkanten der Schneidzähne, die im Bereich zwischen 3° bis 4° liegen, sodass mit den beiden Fräsverfahren jeweils eine Nut 2, 2' mit einer hinterschnittenen Nutwand 4, 4' gefertigt wird. Zur Fertigung des in den Figuren 11 bis 16 dargestellten Schlüsselprofils wird mit dem zweiten Fräswerkzeug die mit dem ersten Fräswerkzeug gefertigte erste Nut 2' verbreitert, indem in die hinterschnittene Nutwand 4' der ersten Nut 2' eine zweite Nut 2 eingefräst wird. Die zweite Nut 2 besitzt einen Nutboden 3, der gegenüber dem Nutboden 3' der ersten Nut 2' parallel versetzt verläuft. Die hinterschnittene Nutwand 4' der ersten Nut 2' wird nämlich nicht auf ihrer gesamten Höhe bearbeitet. Ein unterer, dem Nutboden 3' benachbarter Abschnitt der Nutwand 4' bleibt zumindest im Bereich der beiden Rampen 8, 9 bestehen.

Beim Fertigen der zweiten Nut 2 bildet sich eine hinterschnittene Nutwand 4 aus, die unter Ausbildung einer spitzwinkligen Randkante 21 in die Breitseitenfläche 17 übergeht.

Da unter Ausbildung der Höhenstruktur 6 die Nut 2 mit einer Unterbrechung gefertigt wird, besitzt der Schlüssel zwei von einem Tastelement eines Schließzylinders abtastbare Randkanten 21, 21', wobei die Randkante 21' von der hinterschnittenen Nutwand 4' in dem Bereich ausgebildet wird, in dem die Fertigung der zweiten Nut 2 durch eine Verlagerung der Drehachse des Fräswerkzeuges in Richtung weg vom Schlüsselschaft unterbrochen wird. Diese Bewegung erfolgt in einer Richtung quer zur Drehachse des Fräswerkzeuges, sodass sich die Rampen 8, 9 über die hinterschnittene Nutwand 4 erstrecken können.

Aus der Figur 16 ist ersichtlich, dass sich an den Nutboden 3' der ersten Nut 2' unter Ausbildung eines spitzen Innenwinkels eine erste hinterschnittene Nutwand 4' ausbildet, die unter Ausbildung einer Stufe 22 in den Nutboden 3 der zweiten Nut 2 übergeht. Der Nutboden 3 der zweiten Nut 2 geht wiederum spitzwinklig in die hinterschnittene Nutwand 4 über, welche unter Ausbildung der Randkante 21 in die Breitseitenfläche 17 übergeht.

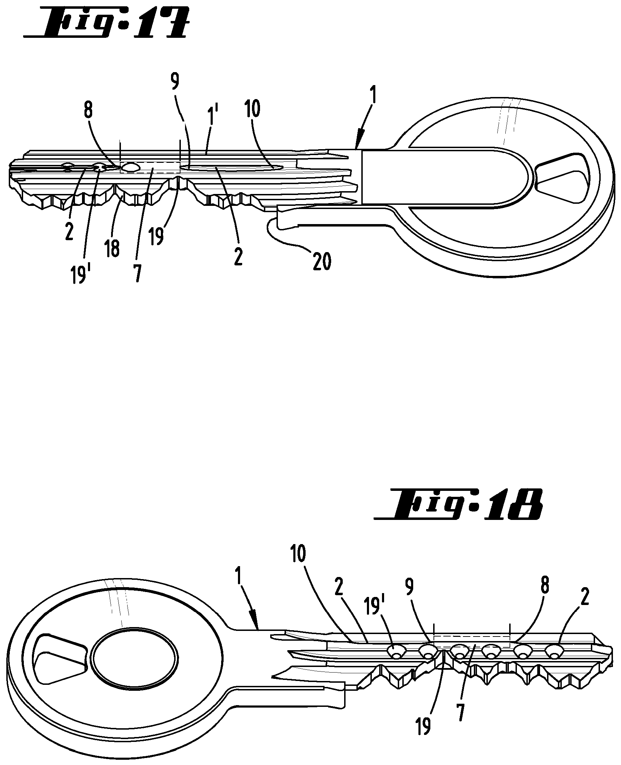

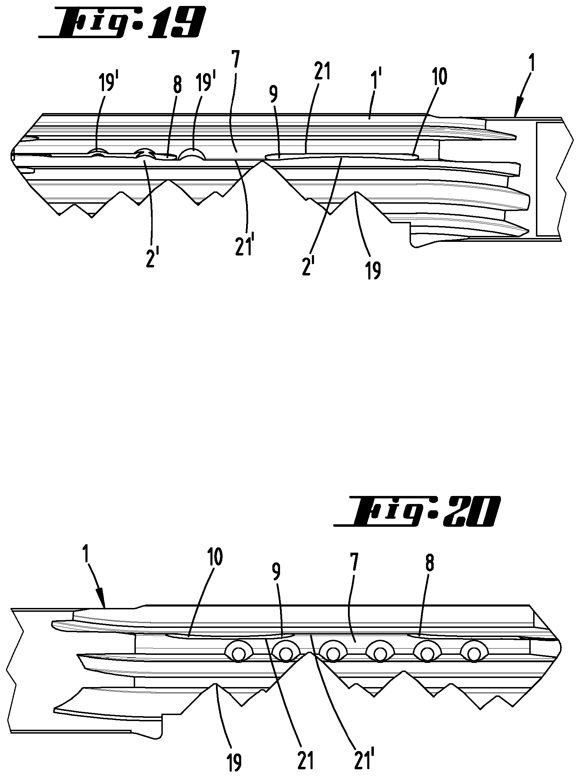

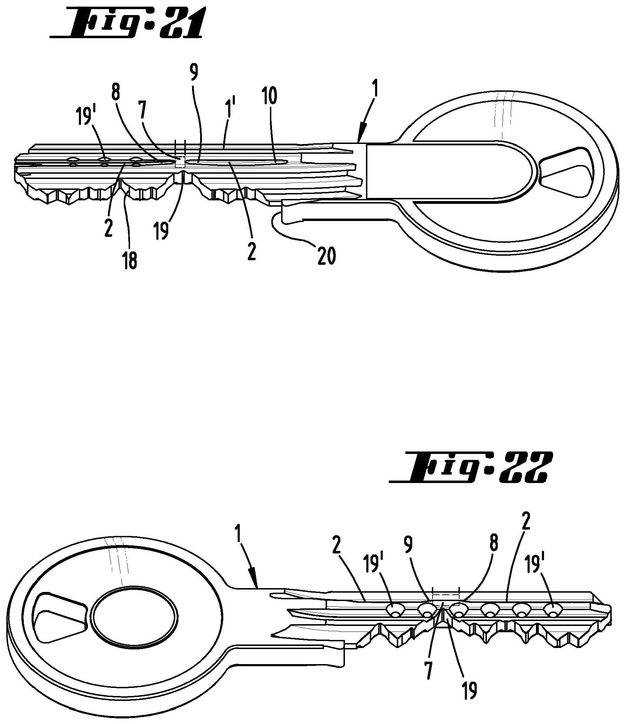

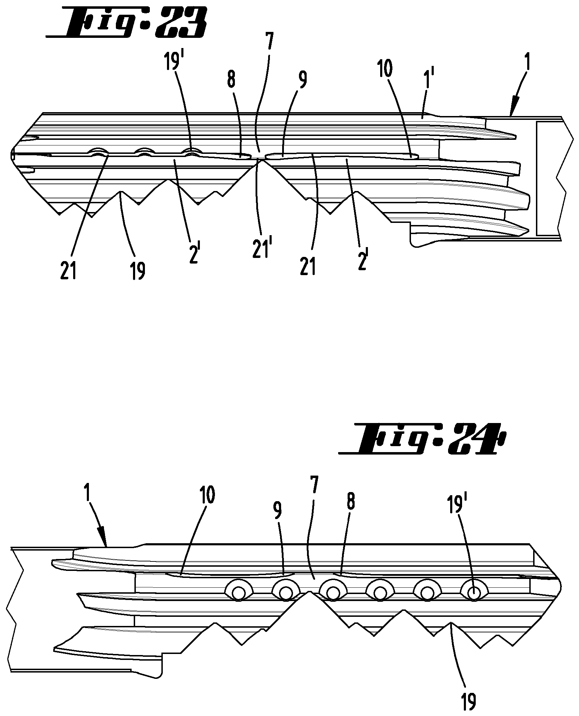

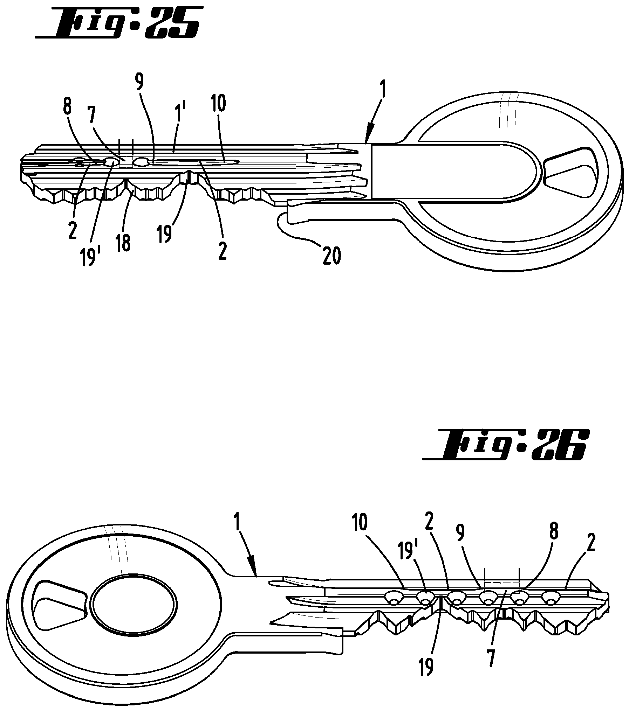

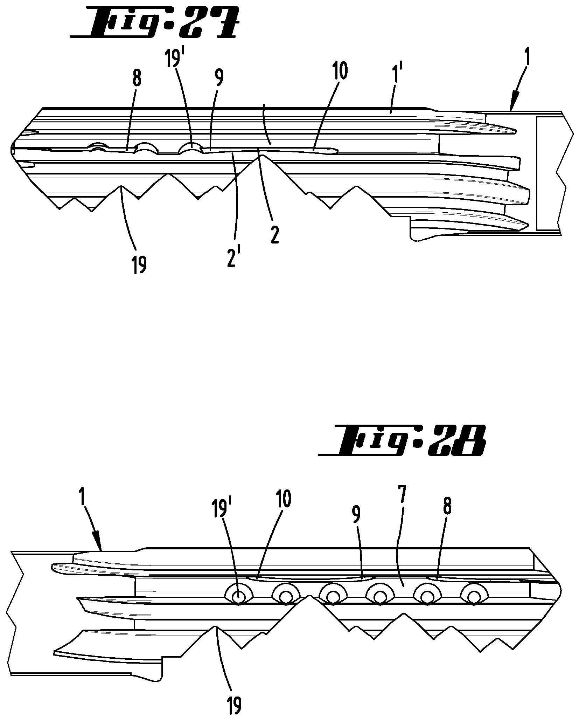

Die in den Figuren 17 bis 28 dargestellten Ausführungsbeispiele unterscheiden sich von dem in den Figuren 11 bis 16 dargestellten Ausführungsbeispiel im Wesentlichen nur durch die Lage der Höhenstrukturen 6, die zur Kodierung des Schlüssels verwendet werden. Die Höhenstrukturen 6, die durch das Aus- und nachfolgendes Wiedereintauchen des Fräswerkzeuges erzeugt werden, besitzen verschiedene Längen, sodass die Höhenstrukturen 6 von einem oder von mehreren Taststiften eines Schließzylinders abgetastet werden können.

Aus den Figuren geht ferner hervor, dass die die erste Nut 2' verbreiternde zweite Nut 2 auch Kodierungsausnehmungen 19, 19' schneiden kann. Die Kodierungsausnehmungen 19, 19' können von einem Fingerfräser gefräst werden und somit einen rotationssymmetrischen Grundriss aufweisen. Die Rotationssymmetrie wird durch die hinterschnittenen Nutwände 4, 4' unterbrochen.

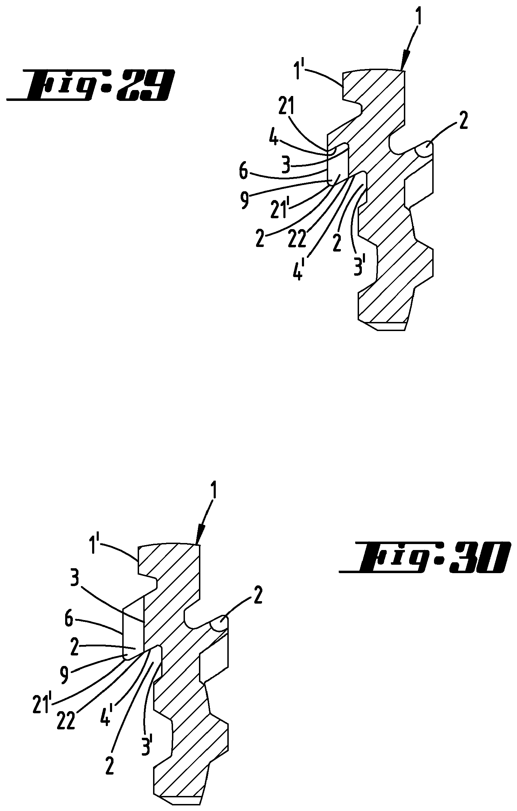

Die Figur 29 verdeutlicht, wie ein Schlüsselprofil, das im Wesentlichen mit dem in der Figur 16 gezeigten Schlüsselprofil identisch ist, alternativ profiliert werden kann, indem dasselbe Werkzeug, mit dem die zweite Nut 2 bei dem in der Figur 16 dargestellten Ausführungsbeispiel in einer Versetztlage verwendet wird, sodass eine breitere zweite Nut 2 gefertigt werden kann. Auch hier bilden sich zwei parallel zueinander verlaufende Randkanten 21, 21' sowie eine Stufe 22 aus, die von dazu hergerichteten Tastelementen eines Schließzylinders abgetastet werden können.

Das in der Figur 30 dargestellte Ausführungsbeispiel besitzt ebenfalls das in der Figur 16 dargestellte Grundprofil, wobei hier jedoch die an die Nut 2 angrenzende Rippe, die in den in den Figuren 16 und 29 dargestellten Ausführungsbeispielen lediglich angeschnitten wird, zumindest bereichsweise vollständig abgetragen wird. Hier bilden sich zum Abtasten die Randkante 21' und die Stufe 22 aus, die jeweils an die hinterschnittene Nutwand 4' angrenzen.

Ein nicht dargestellter Schließzylinder besitzt einen Schlüsselkanal, der eine Profilierung aufweist, die Nuten und Rippen besitzt. Die Rippen sind derart gestaltet, dass sie in die Nuten des Flachschlüssels eingreifen können. Eine Rippe, die in die Nut 2 eintritt, erstreckt sich nur über einen rückwärtigen Bereich innerhalb des Schlüsselkanals. Im Schließzylinder ist ein Zuhaltungsstift angeordnet, der die Höhenstruktur 6 abgetastet. Es können weitere Zuhaltungsstifte vorgesehen sein, die den Nutboden 3 abtasten. Letzteres kann nur einseitig der Höhenstruktur 6 oder beidseitig der Höhenstruktur 6 erfolgen.

Der Anschlag 20 berührt beim vollständig in den Schlüsselkanal eingeführten Schlüssel die Stirnfläche des Schließzylinders beziehungsweise des Zylinderkerns des Schließzylinders. Ein Zuhaltungsstift, der um den Abstand a von der Stirnfläche des Schließzylinders beabstandet ist, kann den sich über die Länge 1 erstreckenden Bereich der Höhenstruktur 6 abtasten. Die Lage der Höhenstruktur trägt zum Schlüsselgeheimnis bei.

### Liste der Bezugszeichen

| | | | |
|---|---|---|---|
| 1 | Rohling, Schlüsselkörper | 22 | Stufe |
| 1' | Breitseite | | |
| 2 | Nut | | |
| 2' | Nut | R | Radius |
| 3 | Nutboden | | |
| 3' | Nutboden | | |
| 4 | hinterschnittene Nutwand | a | Abstand |
| 4' | Nutwand | h | Höhe |
| 5 | Nutwand | l | Länge |
| 6 | Höhenstruktur | t | Nuttiefe |
| 7 | Mittelabschnitt | | |
| 8 | Rampe | | |
| 9 | Rampe | φ | Winkel (Drehachse 16 zur Breitseitenfläche 17) |
| 10 | Auslauf | | |
| 11 | Fräswerkzeug, Scheibenfräser | | |
| 12 | Schneidzahn | | |
| 13 | Schneidkante | | |
| 14 | Schneidkante | | |
| 15 | Schneidkante | | |
| 16 | Drehachse | | |
| 17 | Breitseitenfläche | | |
| 18 | Schlüsselbrust | | |
| 19 | Kodierungsausnehmung | | |
| 19' | Kodierungsausnehmung | | |
| 20 | Anschlag | | |
| 21 | Randkante | | |
| 21' | Randkante | | |

## Patentansprüche

1. Verfahren zum Herstellen einer Profilnut eines Flachschlüssels, wobei mit einem ersten Fräswerkzeug in einen Rohling (1) durch Zustellung des Fräswerkzeugs und mit einem anschließenden Vorschub in einer Richtung parallel zu einer Seitenfläche (17) des Rohlings (1) zumindest eine erste Nut mit einem ersten Nutboden (3') und einer ersten Nutwand (4') in den Rohling gefräst wird, wobei danach ein zweites Fräswerkzeug dem Rohling (1) derart zugestellt wird und anschließend in einer Richtung parallel zu der Seitenfläche (17) des Rohlings (1) vorgeschoben wird, dass beim Vorschub des zweiten Fräswerkzeugs (11) ein in Längsrichtung der Seitenfläche (17) verlaufender, um das Maß der Eintauchtiefe des zweiten Fräswerkzeuges (11) in den Rohling (1) von der Seitenfläche (17) beabstandeter zweiter Nutboden (3) gefräst wird, wobei durch Verändern der Eintauchtiefe des zweiten Fräswerkzeuges (11) eine Höhenstruktur (6) gefertigt wird, wobei die Höhenstruktur (6) beidseitig an einen Mittelabschnitt (7) angrenzende Rampen (8, 9) aufweist, entlang welcher sich die Nuttiefe (t) stetig ändert, wobei das zweite Fräswerkzeug (11) ein um eine Drehachse (16) drehangetriebener Scheibenfräser ist, der eine Vielzahl von auf einer Umfangsfläche angeordneten Schneidzähne (12) aufweist, wobei die Drehachse (16) einen von Null verschiedenen Neigungswinkel (φ) zur Seitenfläche (17) aufweist, **dadurch gekennzeichnet, dass** das Verändern der Eintauchtiefe in einer derartigen Verlagerungsrichtung des zweiten Fräswerkzeugs erfolgt, dass Schneidkanten (13, 14, 15) der Schneidzähne (12) eine sich auch über die Rampen (8, 9) erstreckende an den zweiten Nutboden (3) angrenzende hinterschnittene zweite Nutwand (4) oder eine an die erste Nutwand (4'), welche hinterschnitten ausgebildet ist, angrenzende Stufe (22) erzeugen.

2. Verfahren nach Anspruch 1, **dadurch gekennzeichnet, dass** die Verlagerungsrichtung quer zur Drehachse verläuft und wobei der Neigungswinkel (φ) zwischen 5° und 70°, bevorzugt zwischen 50° und 70° liegt.

3. Verfahren nach einem der vorhergehenden Ansprüche, **dadurch gekennzeichnet, dass** mit den Schneidzähnen (12) eine der zweiten Nutwand (4) gegenüberliegende dritte Nutwand (5) gefertigt wird.

4. Verfahren nach einem der vorhergehenden Ansprüche, **dadurch gekennzeichnet, dass** mit den Schneidzähnen (12) die mit dem ersten Fräswerkzeug gefertigte erste Nut (2') zumindest bereichsweise verbreitert beziehungsweise eine die erste Nutwand (4') ausbildende Rippe verschmälert wird, wobei die erste Nutwand (4') zumindest bereichsweise entfernt wird.

5. Verfahren nach einem der vorhergehenden Ansprüche, **dadurch gekennzeichnet, dass** das zweite Fräswerkzeug (11) bei der Fertigung der Höhenstruktur (6) vollständig oder nur teilweise aus dem Rohling (1) austritt.

6. Flachschlüssel zum Einstecken in einen Schließzylinder, mit mindestens einer in einer Längsrichtung in eine Breitseite (1') eines Schlüsselkörpers (1) eingeschnittenen ersten Nut (2') mit einem ersten Nutboden (3') und einer ersten Nutwand (4'), und einem zweiten Nutboden (3), der gegenüber einer Seitenfläche (17) eine Nuttiefe (t) aufweist, die sich über zwei in voneinander entgegengesetzten Richtungen an einen eine von einem Tastelement des Schließzylinders abtastbare Höhenstruktur (6) ausbildenden Mittelabschnitt (7) angrenzende Rampen (8, 9) zum Mittelabschnitt (7) hin vermindert, **dadurch gekennzeichnet, dass** sich eine an den zweiten Nutboden (3) angrenzende zweite Nutwand (4) eine sich auch über die Rampen (8, 9) erstreckende Hinterschneidung ausbildet oder eine Stufe (22) vorgesehen ist, an der ein an den ersten Nutboden (3') der ersten Nut (2') angrenzender Abschnitt der ersten Nutwand (4'), welche hinterschnitten ausgebildet ist, in den zweiten Nutboden (3) übergeht.

7. Flachschlüssel nach Anspruch 6, **dadurch gekennzeichnet, dass** die Hinterschneidung einen Hinterschneidungswinkel aufweist, der zwischen 5° und 70°, bevorzugt zwischen 50° und 70° liegt.

8. Flachschlüssel nach Anspruch 6 oder 7, **dadurch gekennzeichnet, dass** der zweiten Nutwand (4) eine dritte Nutwand (5) gegenüberliegt.

9. Flachschlüssel nach einem der Ansprüche 6 bis 8, **dadurch gekennzeichnet, dass** die erste Nutwand (4') und die zweite Nutwand (4) hinterschnitten sind.

10. Flachschlüssel nach Anspruch 9, **dadurch gekennzeichnet, dass** die erste Nutwand (4') und die zweite Nutwand (4) denselben Hinterschneidungswinkel aufweisen.

11. Flachschlüssel nach einem der Ansprüche 6 bis 10, **dadurch gekennzeichnet, dass** die Rampen (8, 9) im Längsquerschnitt entlang einer hohlen Bogenlinie verlaufen, die insbesondere einer Kreisbogenlinie ähnlich ist.

12. Flachschlüssel nach einem der Ansprüche 6 bis 11, **gekennzeichnet durch** ein oder mehrere in eine Schlüsselbrust (18) eingeschnittene Kodierungsausnehmungen (19) und/oder durch ein oder mehrere in der Breitseite (1') angeordnete Kodierungsausnehmungen (19').

13. System aus zumindest zwei Flachschlüsseln gemäß einem der Ansprüche 6 bis 12, **dadurch gekennzeichnet, dass** sich die Höhenstrukturen (6) der beiden Schlüssel durch ihren Abstand (a) zu einem Anschlag (20) und/oder durch ihre Länge (l) und/oder durch die vom Nutboden (3) gemessene Höhe (h) des Mittelabschnitts (7) unterscheiden.

14. Verwendung eines Flachschlüssels in einem Schließzylinder, **dadurch gekennzeichnet, dass** der Flachschlüssel gemäß einem der Ansprüche 6 bis 12 ausgebildet ist und dass der Mittelabschnitt (7) der Höhenstruktur (6) von einem Zuhaltungsstift abgetastet wird und/oder dass ein Bereich des zweiten Nutbodens (3) oder die an die hinterschnitten ausgebildete erste Nutwand (4') angrenzende Stufe (22) von einem Zuhaltungsstift abgetastet wird.

## Claims

1. Method for producing a profile groove in a flat key, wherein a first milling tool is used to mill at least one first groove with a first groove bottom (3') and a first groove wall (4') into a blank (1) by feeding the milling tool and then advancing it in a direction parallel to a side surface (17) of the blank (1) is milled into the blank, whereby a second milling tool is then fed to the blank (1) and subsequently advanced in a direction parallel to the side surface (17) of the blank (1) in such a way that, when the second milling tool (11) is advanced a second groove base (3) is milled, which runs in the longitudinal direction of the side surface (17) and is spaced from the side surface (17) by the amount of the penetration depth of the second milling tool (11) into the blank (1), whereby a height structure (6) is produced, wherein the height structure (6) has ramps (8, 9) adjacent to a central section (7) on both sides, along which the groove depth (t) changes continuously, wherein the second milling tool (11) is a disc milling cutter driven in rotation about an axis of rotation (16), which has a plurality of cutting teeth (12) arranged on a circumferential surface, wherein the axis of rotation (16) has an angle of inclination (φ) to the side surface (17) that is not zero, **characterized in that** the change in the depth of penetration takes place in such a direction of displacement of the second milling tool that cutting edges (13, 14, 15) of the cutting teeth (12) produce an undercut second groove wall (4) extending over the ramps (8, 9) and adjacent to the second groove bottom (3) or a step (22) adjacent to the first groove wall (4'), which is undercut.

2. Method according to claim 1, **characterized in that** the displacement direction runs transversely to the axis of rotation and the angle of inclination (φ) is between 5° and 70°, preferably between 50° and 70°.

3. Method according to one of the preceding claims, **characterized in that** a third groove wall (5) opposite the second groove wall (4) is produced with the cutting teeth (12).

4. Method according to one of the preceding claims, **characterized in that** the cutting teeth (12) are used to widen the first groove (2') produced with the first milling tool, at least in some areas, or to narrow a rib forming the first groove wall (4'), whereby the first groove wall (4') is removed, at least in some areas.

5. Method according to one of the preceding claims, **characterized in that** the second milling tool (11) emerges completely or only partially from the blank (1) during the production of the height structure (6).

6. Flat key for insertion into a lock cylinder, with at least one first groove (2') cut into a broad side (1') of a key body (1) in a longitudinal direction, with a first groove base (3') and a first groove wall (4'), and a second groove base (3), which has a groove depth (t) relative to a side surface (17) that is reduced over two ramps (8, 9) adjacent to a central section (7) forming a height structure (6) that can be scanned by a scanning element of the lock cylinder towards a central section (7), **characterized in that** a second groove wall (4) adjacent to the second groove base (3) forms an undercut extending also over the ramps (8, 9) or a step (22) is provided at which a section of the first groove wall (4') adjacent to the first groove base (3') of the first groove (2'), which is formed with an undercut, merges into the second groove base (3).

7. Flat key according to claim 6, **characterized in that** the undercut has an undercut angle which is between 5° and 70°, preferably between 50° and 70°.

8. Flat key according to claim 6 or 7, **characterized in that** the second groove wall (4) is opposite a third groove wall (5).

9. Flat key according to one of claims 6 to 8, **characterized in that** the first groove wall (4') and the second groove wall (4) are undercut.

10. Flat wrench according to claim 9, **characterized in that** the first groove wall (4') and the second groove wall (4) have the same undercut angle.

11. Flat key according to one of claims 6 to 10, **characterized in that** the ramps (8, 9) run in longitudinal cross-section along a hollow arc line which is particularly similar to a circular arc line.

12. Flat key according to one of claims 6 to 11, **characterized by** one or more coding recesses (19) cut into a key face (18) and/or by one or more coding recesses (19') arranged in the broad side (1').

13. System comprising at least two flat keys according to one of claims 6 to 12, **characterized in that** the height structures (6) of the two keys differ in their distance (a) from a stop (20) and/or in their length (l) and/or in the height (h) of the central section (7) measured from the groove base (3).

14. Use of a flat key in a lock cylinder, **characterized in that** the flat key is designed according to one of claims 6 to 12 and that the middle section (7) of the height structure (6) is scanned by a tumbling pin and/or that an area of the second groove base (3) or the step (22) adjacent to the undercut designed first groove wall (4') is scanned by a tumbling pin.

## Revendications

1. Procédé de fabrication d'une rainure profilée d'une clé plate, dans lequel, à l'aide d'un premier outil de fraisage, on fraise dans une ébauche (1) en avançant l'outil de fraisage, puis en le déplaçant dans une direction parallèle à une surface latérale (17) de l'ébauche (1) est fraisée dans l'ébauche, au moyen d'un premier outil de fraisage, par avance de l'outil de fraisage puis par avancement dans une direction parallèle à la surface latérale (17) de l'ébauche (1), un deuxième outil de fraisage étant ensuite avancé vers l'ébauche (1) puis déplacé dans une direction parallèle à la surface latérale (17) de l'ébauche (1), de telle sorte que lors de l'avance du deuxième outil de fraisage (11) un deuxième fond de rainure (3) s'étendant dans le sens longitudinal de la surface latérale (17) et espacé de la surface latérale (17) de la profondeur d'immersion du deuxième outil de fraisage (11) dans l'ébauche (1) est fraisé, une structure en hauteur (6) est réalisée, la structure en hauteur (6) présentant des rampes (8, 9) adjacentes des deux côtés à une partie centrale (7), le long desquelles la profondeur de rainure (t) varie de manière continue, le deuxième outil de fraisage (11) étant une fraise à disque entraînée en rotation autour d'un axe de rotation (16) qui présente une pluralité de dents de coupe (12) disposées sur une surface périphérique, l'axe de rotation (16) présentant un angle d'inclinaison (φ) différent de zéro par rapport à la surface latérale (17), **caractérisé en ce que** la modification de la profondeur de plongée s'effectue dans une direction de déplacement du deuxième outil de fraisage telle que les arêtes de coupe (13, 14, 15) des dents de coupe (12) produisent une deuxième paroi de rainure (4) en contre-dépouille s'étendant également sur les rampes (8, 9) et adjacente au deuxième fond de rainure (3) ou un gradin (22) adjacent à la première paroi de rainure (4'), qui est réalisée en contre-dépouille.

2. Procédé selon la revendication 1, **caractérisé en ce que** la direction de déplacement s'étend transversalement à l'axe de rotation et l'angle d'inclinaison (φ) est compris entre 5° et 70°, de préférence entre 50° et 70°.

3. Procédé selon l'une des revendications précédentes, **caractérisé en ce qu'**une troisième paroi de rainure (5) opposée à la deuxième paroi de rainure (4) est réalisée à l'aide des dents de coupe (12).

4. Procédé selon l'une des revendications précédentes, **caractérisé en ce que** les dents de coupe (12) élargissent au moins par endroits la première rainure (2') réalisée avec le premier outil de fraisage ou rétrécissent une nervure formant la première paroi de rainure (4'), la première paroi de rainure (4') étant au moins partiellement retirée.

5. Procédé selon l'une des revendications précédentes, **caractérisé en ce que** le deuxième outil de fraisage (11) sort complètement ou seulement partiellement de l'ébauche (1) lors de la fabrication de la structure en hauteur (6).

6. Clé plate à insérer dans un cylindre de serrure, comportant au moins une première rainure (2') découpée dans le sens longitudinal dans un côté large (1') d'un corps de clé (1), avec un premier fond de rainure (3') et une première paroi de rainure (4'), et un deuxième fond de rainure (3), qui présente, par rapport à une surface latérale (17), une profondeur de rainure (t) qui est réduite sur deux rampes ( ) adjacentes à une section centrale (7) formant une structure en hauteur (6) pouvant être palpée par un élément palpeur du cylindre de serrure, dans des directions opposées l'une à l'autre, (8, 9) adjacentes à la partie centrale (7), **caractérisé en ce qu'**une deuxième paroi de rainure (4) adjacente au deuxième fond de rainure (3) forme une contre-dépouille s'étendant également au-delà des rampes (8, 9) ou qu'il est prévu un gradin (22) au niveau duquel une partie de la première paroi de rainure (4') adjacente au premier fond de rainure (3') de la première rainure (2'), qui est réalisée en contre-dépouille, se prolonge dans le deuxième fond de rainure (3).

7. Clé plate selon la revendication 6, **caractérisée en ce que** la contre-dépouille présente un angle de contre-dépouille compris entre 5° et 70°, de préférence entre 50° et 70°.

8. Clé plate selon la revendication 6 ou 7, **caractérisée en ce qu'**une troisième paroi de rainure (5) est opposée à la deuxième paroi de rainure (4).

9. Clé plate selon l'une des revendications 6 à 8, **caractérisée en ce que** la première paroi de rainure (4') et la deuxième paroi de rainure (4) sont en contre-dépouille.

10. Clé plate selon la revendication 9, **caractérisée en ce que** la première paroi de rainure (4') et la deuxième paroi de rainure (4) présentent le même angle de contre-dépouille.

11. Clé plate selon l'une des revendications 6 à 10, **caractérisée en ce que** les rampes (8, 9) s'étendent dans la section transversale longitudinale le long d'une ligne courbe creuse qui est notamment similaire à une ligne courbe circulaire.

12. Clé plate selon l'une des revendications 6 à 11, **caractérisée par** un ou plusieurs évidements de codage (19) découpés dans un pan de clé (18) et/ou par un ou plusieurs évidements de codage (19') disposés dans le côté large (1').

13. Système composé d'au moins deux clés plates selon l'une des revendications 6 à 12, **caractérisé en ce que** les structures en hauteur (6) des deux clés se distinguent par leur distance (a) par rapport à une butée (20) et/ou par leur longueur (l) et/ou par la hauteur (h) de la partie centrale (7) mesurée à partir du fond de la rainure (3).

14. Utilisation d'une clé plate dans un cylindre de fermeture, **caractérisée en ce que** la clé plate est conçue selon l'une des revendications 6 à 12 et **en ce que** la partie centrale (7) de la structure en hauteur (6) est détectée par un goujon de verrouillage et/ou **en ce qu'**une zone du deuxième fond de rainure (3) ou le gradin (22) adjacent à la première paroi de rainure (4') formée en contre-dépouille est palpé par une goupille de verrouillage.
